# EUROPÄISCHE PATENTANMELDUNG

(11) **EP 4 574 548 A1**
(43) Veröffentlichungstag der Anmeldung: **25.06.2025**
(21) Anmeldenummer: 24219828.1
(22) Anmeldetag: 13.12.2024
(51) Int. Cl.: B60L 53/65, B60L 53/66

(54) **FAHRZEUGERKENNUNG ZUM BEREITSTELLEN VON ABRECHNUNGSINFORMATION**

(30) Priorität: 18.12.2023 DE 102023135445
(71) Anmelder: Deutsche Post AG, 53113 Bonn (DE)
(72) Erfinder: Salomon, Jörg, 53113 Bonn (DE)
(74) Vertreter: Cohausz & Florack

(57) **Zusammenfassung**

Es wird unter anderem eine Vorrichtung offenbart, die Vorrichtung umfassend Mittel eingerichtet zum:
- Erhalten einer Ladeinformation, wobei die Ladeinformation eine von einer Ladevorrichtung an ein Fahrzeug übertragene elektrische Energie anzeigt;
- Erhalten einer ersten Fahrzeugkennung, welche das Fahrzeug identifiziert;
- Bereitstellen einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug übertragene elektrische Energie repräsentiert.

## Beschreibung

### Technisches Gebiet

Beispielhafte Ausführungsformen der vorliegenden Offenbarung betreffen unter anderem eine Vorrichtung, ein Verfahren und ein Computerprogramm zum Erhalten einer ersten Fahrzeugkennung, welche ein Fahrzeug (z.B. ein Elektrofahrzeug) identifiziert. Dabei wird basierend auf der ersten Fahrzeugkennung eine Abrechnungsinformation bereitgestellt, welche zumindest eine von einer Ladevorrichtung an das Fahrzeug übertragene elektrische Energie repräsentiert

### Hintergrund

Zum Beispiel im Bereich der Elektromobilität kann es bei einem Ladevorgang von einem Elektrofahrzeug an einer Ladestation vorteilhaft sein, wenn die angefallenen Energiekosten beispielsweise in Abhängigkeit von dem betreffenden Fahrzeug oder Nutzer auf flexible Weise kommuniziert und abgerechnet werden können. Hierbei bestehen jedoch unterschiedliche technische Herausforderungen, zum Beispiel wenn eine bestimmte Ladevorrichtung nicht über die notwendige technische Ausstattung verfügt, das aufzuladende Fahrzeug zu erkennen. Darüber hinaus sind Sicherheitsvorkehrungen erforderlich, um Betrugsfälle bei der Abrechnung der Energiekosten zu verhindern.

### Zusammenfassung beispielhafter Ausführungsformen der vorliegenden Offenbarung

Die vorliegende Offenbarung hat sich daher unter anderem die Aufgabe gestellt, die Erfassung von Energiekosten beim Aufladen eines Fahrzeugs zu vereinfachen und zugleich eine flexible und betrugssichere Abrechnung der Energiekosten zu ermöglichen.

Gemäß der vorliegenden Offenbarung wird eine Vorrichtung offenbart, wobei die Vorrichtung Mittel umfasst, und wobei die Mittel eingerichtet sind zum:
- Erhalten einer Ladeinformation, wobei die Ladeinformation eine von einer Ladevorrichtung an ein Fahrzeug übertragene elektrische Energie anzeigt;
- Erhalten einer ersten Fahrzeugkennung, welche das Fahrzeug identifiziert;
- Bereitstellen einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug übertragene elektrische Energie repräsentiert.

Gemäß der vorliegenden Offenbarung wird weiterhin ein Verfahren offenbart, wobei das Verfahren die folgenden Schritte umfasst:
- Erhalten einer Ladeinformation, wobei die Ladeinformation eine von einer Ladevorrichtung an ein Fahrzeug übertragene elektrische Energie anzeigt;
- Erhalten einer ersten Fahrzeugkennung, welche das Fahrzeug identifiziert;
- Bereitstellen einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug übertragene elektrische Energie repräsentiert.

Zum Beispiel ist die Vorrichtung gemäß der vorliegenden Offenbarung eingerichtet zur Ausführung und/oder Steuerung des Verfahrens gemäß der vorliegenden Offenbarung, oder die Vorrichtung gemäß der vorliegenden Offenbarung umfasst jeweilige Mittel zur Ausführung und/oder Steuerung des Verfahrens gemäß der vorliegenden Offenbarung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Beispielsweise können eines oder mehrere der Mittel durch einen oder mehrere Prozessoren gebildet sein.

In einem weiteren Beispiel ist die Vorrichtung gemäß der vorliegenden Offenbarung eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß der vorliegenden Offenbarung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Gemäß der vorliegenden Offenbarung wird weiterhin ein Computerprogramm offenbart, wobei das Computerprogramm Befehle umfasst, die bewirken, dass eine Vorrichtung die Schritte des Verfahrens gemäß der vorliegenden Offenbarung ausführt Dabei kann es sich zum Beispiel um die Vorrichtung gemäß der vorliegenden Offenbarung handeln. In einem weiteren Beispiel umfasst das Computerprogramm Programmanweisungen, die einen Prozessor zur Ausführung und/oder Steuerung des Verfahrens gemäß der vorliegenden Offenbarung veranlassen, wenn das Computerprogramm auf dem Prozessor läuft. Unter einem Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, zum Beispiel einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.

Zum Beispiel ist die Ladevorrichtung über ein Ladekabel mit dem Fahrzeug verbunden, wobei das Ladekabel beispielsweise einen oder mehrere Kabelabschnitte umfasst, welche die Ladevorrichtung mit dem Fahrzeug verbinden. Die Vorrichtung gemäß der vorliegenden Offenbarung kann zum Beispiel mit den Kabelabschnitten des Ladekabels verbunden werden, wobei die Vorrichtung zusätzlich oder alternativ als Teil des Ladekabels verstanden werden kann. Beispielsweise verbindet ein Kabelabschnitt des Ladekabels die Ladevorrichtung mit der Vorrichtung, und ein weitere Kabelabschnitt verbindet die Vorrichtung mit dem Fahrzeug.

Zum Beispiel wird von der Ladevorrichtung bereitgestellte elektrische Energie über ein Ladekabel an das Fahrzeug übertragen. Das Fahrzeug kann als Elektrofahrzeug mit einem elektrischen Antrieb verstanden werden (z.B. ein Kraftfahrzeug angetrieben mit einem rein elektrischen Antrieb oder teilweise elektrischen Antrieb), wobei die elektrische Energie für den Antrieb zum Beispiel von einer oder von mehreren elektrischen Batterien des Fahrzeugs bereitgestellt wird. Zum Beispiel kann über ein Ladekabel demnach elektrische Energie an das Fahrzeug zum Aufladen der einen oder mehreren Batterien des Fahrzeugs übertragen werden.

Eine Ladevorrichtung ist zum Beispiel eine Ladestation oder ein Teil einer Ladestation, welche elektrische Energie zum Aufladen der Batterie von Elektrofahrzeugen bereitstellt. Eine Ladevorrichtung kann beispielsweise als private Ladestation (z.B. eine Wallbox) verstanden werden, welche für den privaten Gebrauch konzipiert ist und an einer Wand installiert ist. Alternativ oder zusätzlich kann private Ladestation durch eine Steckdose (z.B. eine Starkstromsteckdose) gegeben sein. In anderen Beispielen ist die Ladevorrichtung eine öffentliche Ladestation (z.B. eine Schnellladestation).

Zum Beispiel kann eine Ladeinformation als elektronisch kodierte Information verstanden werden, welche eine von der Ladevorrichtung an das Fahrzeug übertragene elektrische Energie anzeigt. Dabei kann die Ladeinformation die elektrische Energie zum Beispiel als Zahlenwert in einer physikalischen Einheit (z.B. kWh) anzeigen. Die Ladeinformation kann beispielsweise erhalten (z.B. empfangen) werden von einem elektrischen Stromzähler, welcher Teil der Vorrichtung gemäß der vorliegenden Offenbarung oder mit dieser Vorrichtung verbunden ist. Zum Beispiel ist ein solcher Stromzähler eingerichtet, die über ein Ladekabel von der Ladevorrichtung an das Fahrzeug übertragene elektrische Energie zu erfassen (z.B. zu messen). Dabei kann es sich beispielsweise um die elektrische Energie handeln, die während eines bestimmten Ladevorgangs von der Ladevorrichtung an das Fahrzeug übertragen wird. Der Stromzähler bestimmt beispielsweise basierend auf der erfassten elektrischen Energie die Ladeinformation und überträgt diese Ladeinformation an die Vorrichtung gemäß der vorliegenden Offenbarung.

Eine Fahrzeugkennung ist beispielsweise als elektronisch kodierte Information zu verstehen, auf welcher basierend ein Fahrzeug eindeutig identifizierbar ist Zum Beispiel repräsentiert (z.B. umfasst) die Fahrzeugkennung eine Kennung eines Fahrzeugs, wobei eine solche Kennung beispielsweise eine Abfolge von Buchstaben und/oder Zahlen umfassen kann. Beispielsweise ist die Fahrzeugkennung durch eine Fahrzeugidentifikationsnummer gegeben, wobei die genaue Form der Fahrzeugkennung von einem verwendeten Protokoll abhängen kann. Zum Beispiel kann gemäß dem ISO 15118 Protokoll die erste Fahrzeugkennung durch den *"Electric Vehicle Identifier (EVID)"* gegeben sein.

Zum Beispiel wird die erste Fahrzeugkennung an der Vorrichtung gemäß der vorliegenden Offenbarung erhalten (z.B. empfangen), indem die erste Fahrzeugkennung von dem Fahrzeug, welches von der ersten Fahrzeugkennung identifiziert wird, an die Vorrichtung übertragen wird. Beispielsweise kann die erste Fahrzeugkennung über ein Ladekabel (z.B. über einen Kabelabschnitt des Ladekabels, welcher das Fahrzeug und die Vorrichtung miteinander verbindet) von dem Fahrzeug an die Vorrichtung übertragen werden.

Zum Beispiel umfasst das Bereitstellen der Abrechnungsinformation ein Bestimmen (z.B. ein elektronisches Erzeugen) der Abrechnungsinformation zumindest teilweise basierend auf der zuvor erhaltenen Ladeinformation. Demnach repräsentiert die Abrechnungsinformation beispielsweise zumindest die von der Ladevorrichtung an das Fahrzeug übertragene elektrische Energie, die von der zuvor erhaltenen Ladeinformation angezeigt wird. Dazu kann die Abrechnungsinformation beispielsweise die elektrische Energie als Zahlenwert in einer physikalischen Einheit (z.B. kWh) anzeigen. In einem weiteren Beispiel kann die Abrechnungsinformation einen Kostenbetrag (z.B. in EUR) anzeigen, welcher die Energiekosten (z.B. Stromkosten gemäß einem bestimmten Stromtarifl für die übertragene elektrische Energie wiedergibt. Die bereitgestellte Abrechnungsinformation kann weitere Information oder Parameter umfassen, wie zum Beispiel die zuvor erhaltene Fahrzeugkennung oder andere Parameter, die zum Beispiel einen Ladevorgang zwischen der Ladevorrichtung und dem Fahrzeug betreffen.

Zum Beispiel umfasst das Bereitstellen der Abrechnungsinformation das Übertragen der Abrechnungsinformation an einen Backend-Server, an welchem die Abrechnungsinformation empfangen und weiterverarbeitet wird (um z.B. eine Erstattung der Energiekosten zu ermöglichen). Für eine Übertragung der Abrechnungsinformation können zum Beispiel Kommunikationsmittel (z.B. eine Mobilfunkschnittstelle) der Vorrichtung gemäß der vorliegenden Offenbarung verwendet werden. Ein Backend-Server ist zum Beispiel ein Verwaltungsserver, an dem Abrechnungsinformationen über eine Vielzahl von Ladevorgängen von einer Vielzahl von Elektrofahrzeugen erhalten und verwaltet werden. Beispielsweise besteht zwischen der Vorrichtung und dem Backend-Server eine Kommunikationsverbindung (z.B. eine Mobilfunkverbindung), über welche die Vorrichtung Abrechnungsinformationen an den Backend-Server übertragen kann.

Falls beispielsweise festgestellt wird, dass die erste Fahrzeugkennung nicht mit der zweiten Fahrzeugkennung übereinstimmt, erfolgt zum Beispiel kein Bereitstellen der Abrechnungsinformation. Zum Beispiel wird die Abrechnungsinformation in einem solchen Fall gar nicht erst bestimmt, und es erfolgt insbesondere keine Übermittlung einer Abrechnungsinformation an einen Backend-Server. Die Energiekosten für die übertragene elektrische Energie wie von der Ladeinformation angezeigt werden dann beispielsweise auf einem anderen Weg abgerechnet, auch wenn die Ladevorrichtung dennoch für das Aufladen der Batterie des Fahrzeugs verwendet werden kann. Insbesondere findet dann keine Abrechnung der Energiekosten über das Unternehmen des Mitarbeiters statt

Zum Beispiel bestimmt die Vorrichtung gemäß der vorliegenden Offenbarung, ob die erhaltene erste Fahrzeugkennung mit einer zweiten Fahrzeugkennung, welche in einem elektronischen Speicher der Vorrichtung abgespeichert ist, übereinstimmt. Eine solche Übereinstimmung kann beispielsweise vorliegen, wenn die erste Fahrzeugkennung gleich der zweiten Fahrzeugkennung ist oder wenn die erste Fahrzeugkennung und die zweite Fahrzeugkennung dasselbe Fahrzeug identifizieren. Falls die erste Fahrzeugkennung mit der zweiten Fahrzeugkennung übereinstimmt, stellt die Vorrichtung eine Abrechnungsinformation bereit, wobei die Abrechnungsinformation zumindest die von der Ladevorrichtung an das Fahrzeug übertragene elektrische Energie repräsentiert.

Alternativ oder zusätzlich kann das Bestimmen, ob die erste Fahrzeugkennung mit der zweiten Fahrzeugkennung übereinstimmt, an einem Backend-Server erfolgen. In einem solchen Beispiel überträgt die Vorrichtung vor einem Bereitstellen einer Abrechnungsinformation zum Beispiel die erhaltene erste Fahrzeugkennung an den Backend-Server, welcher die erste Fahrzeugkennung mit einer zweiten Fahrzeugkennung vergleicht. Dazu ist die zweite Fahrzeugkennung beispielsweise in einem elektronischen Speicher des Backend-Servers gespeichert. Zum Beispiel wird nach Bestimmen, ob die erste Fahrzeugkennung mit der zweiten Fahrzeugkennung übereinstimmt, eine Information darüber, ob die erste Fahrzeugkennung mit der zweiten Fahrzeugkennung übereinstimmt, von dem Backend-Server an die Vorrichtung übertragen. Beispielsweise wird in Abhängigkeit von dieser Information an der Vorrichtung eine Abrechnungsinformation bereitgestellt

Zum Beispiel identifiziert die zweite Fahrzeugkennung ein bestimmtes Fahrzeug, für welches eine gesonderte Abrechnung der elektrischen Energie zum Aufladen einer Batterie dieses Fahrzeugs erfolgen darf. Zum Beispiel kann die zweite Fahrzeugkennung ein bestimmtes Fahrzeug eines Mitarbeiters eines Unternehmens identifizieren, für welches es dem Mitarbeiter gestattet ist, die Kosten für das Aufladen der elektrischen Batterie dieses Fahrzeugs über das Unternehmen abzurechnen.

Vorteilhafterweise kann durch die Vorrichtung gemäß der vorliegenden Offenbarung zum Beispiel eine Abrechnung der Stromkosten für das Aufladen des Fahrzeugs auf den Fall beschränkt werden, in dem eine solche Abrechnung auch tatsächlich für das Fahrzeug gestattet ist. In einem solchen Fall kommuniziert die Vorrichtung beispielsweise mit einem Backend-Server eines des Unternehmens, sodass eine Abrechnung der Stromkosten über dieses Unternehmen erfolgt. Anderenfalls erfolgt beispielsweise keine Kommunikation mit dem Backend-Server und auch keine entsprechende Abrechnung, das Ladekabel kann aber vorteilhafterweise dennoch zum Aufladen des Fahrzeugs verwendet werden.

Durch das Erkennen des Fahrzeugs werden beispielsweise Betrugsfälle verhindert, in denen ein Mitarbeiter eines Unternehmens die Stromkosten für das Aufladen anderer Fahrzeuge, für welche eine Abrechnung der Stromkosten über das Unternehmen nicht gestattet ist, ebenfalls über das Unternehmen abzurechnen versucht Insbesondere findet demnach eine Erkennung auf Fahrzeugbasis und beispielsweise nicht auf Nutzerbasis statt

Die Vorrichtung gemäß der vorliegenden Offenbarung ermöglicht beispielsweise eine Fahrzeugerkennung zum Zweck der Abrechnung vorteilhafterweise unabhängig davon, ob die Ladevorrichtung eine Fahrzeugerkennung technisch unterstützt. Beispielsweise handelt es sich bei der Ladevorrichtung um eine private Ladestation (z.B. eine Wechselstrom-Ladestation oder z.B. eine Steckdose), welche aus technischen Gründen keine Fahrzeugerkennung unterstützt, weil sie beispielsweise entsprechende Kommunikationsprotokolle (z.B. das ISO 15118-Protokoll) für die Kommunikation zwischen einer Ladestation und einem Fahrzeug nicht oder nicht vollständig unterstützt. Durch die beschriebene Verwendung der Vorrichtung gemäß der vorliegenden Offenbarung kann vorteilhafterweise eine Erkennung eines Fahrzeugs und eine gezielte Abrechnung unabhängig von der jeweiligen technischen Ausstattung der Ladevorrichtung ermöglicht werden.

Weitere Vorteile der beispielhaften Aspekte der vorliegenden Offenbarung werden nachfolgend anhand beispielhafter Ausführungsformen beschrieben, deren Offenbarung für die Vorrichtung, das Verfahren und das Computerprogramm der vorliegenden Offenbarung gleichermaßen gelten soll.

In einer beispielhaften Ausführungsform sind die Mittel der Vorrichtung gemäß der vorliegenden Offenbarung ferner eingerichtet zum Bestimmen, ob die erste Fahrzeugkennung mit der zweiten Fahrzeugkennung übereinstimmt

Wie oben beschrieben kann das Bestimmen, ob die erste Fahrzeugkennung mit der zweiten Fahrzeugkennung übereinstimmt, zum Beispiel von der Vorrichtung gemäß der vorliegenden Offenbarung durchgeführt werden. Dieses Bestimmen umfasst beispielsweise ein Vergleichen der zuvor erhaltenen ersten Fahrzeugkennung durch die Vorrichtung mit der zweiten Fahrzeugkennung, wobei die zweite Fahrzeugkennung in einem elektronischen Speicher der Vorrichtung abgespeichert ist Falls ein solches Vergleichen zum Beispiel ergibt, dass die erste Fahrzeugkennung gleich der zweiten Fahrzeugkennung ist oder dass die erste Fahrzeugkennung und die zweite Fahrzeugkennung dasselbe Fahrzeug identifizieren, bestimmt die Vorrichtung, dass die erste Fahrzeugkennung mit der zweiten Fahrzeugkennung übereinstimmt. In einem Beispiel können in einem elektronischen Speicher der Vorrichtung eine Vielzahl von Fahrzeugkennungen einschließlich der zweiten Fahrzeugkennung abgespeichert sein, wobei das Bestimmen, ob die ersten Fahrzeugkennung mit der zweiten Fahrzeugkennung übereinstimmt, ein Vergleichen der ersten Fahrzeugkennung mit zumindest einer (z.B. mit jeder) Fahrzeugkennung der Vielzahl an Fahrzeugkennungen umfassen kann. Aus einem solchen Vergleich kann beispielsweise folgen, dass eine bestimmte Fahrzeugkennung der Vielzahl an Fahrzeugkennungen mit der ersten Fahrzeugkennung übereinstimmt.

Vorteilhafterweise kann basierend auf diesem Vergleich bestimmt werden, ob es für das durch die erste Fahrzeugkennung identifizierte Fahrzeug gestattet ist, die Kosten für das Aufladen der elektrischen Batterie dieses Fahrzeugs über ein Unternehmen abzurechnen, sodass eine entsprechende Abrechnungsinformation bereitzustellen ist.

In einer beispielhaften Ausführungsform gemäß der vorliegenden Offenbarung identifiziert die Abrechnungsinformation ferner das Fahrzeug, wobei eine Abrechnung der an das Fahrzeug übertragenen elektrischen Energie zumindest teilweise basierend auf dem von der Abrechnungsinformation identifizierten Fahrzeug erfolgt

Zum Beispiel umfasst die Abrechnungsinformation einen Parameter, welcher die von der Ladevorrichtung an das Fahrzeug übertragene elektrische Energie als Zahlenwert in einer physikalischen Einheit (z.B. kWh) angibt, und außerdem einen weiteren Parameter, welcher eine Kennung des Fahrzeugs angibt, auf welcher basierend das Fahrzeug identifizierbar ist Beispielsweise kann die Abrechnungsinformation (z.B. repräsentiert durch jeweilige Parameter) die erste Fahrzeugkennung und/oder die zweite Fahrzeugkennung umfassen. Basierend auf der bereitgestellten Abrechnungsinformation kann zum Beispiel i) die von der Ladevorrichtung an das Fahrzeug übertragene elektrische Energie bestimmt werden und ii) das Fahrzeug identifiziert werden, an welches die elektrische Energie übertragen wurde.

Zum Beispiel erfolgt eine Abrechnung der an das Fahrzeug übertragenen elektrischen Energie zumindest teilweise basierend auf dem von der Abrechnungsinformation identifizierten Fahrzeug, indem ein Bestimmen von Energiekosten für die an das Fahrzeug übertragene elektrische Energie zumindest teilweise von dem von der Abrechnungsinformation identifizierten Fahrzeug abhängt Wenn im Rahmen des Bereitstellens die Abrechnungsinformation beispielsweise an einen Backend-Server übertragen wird, kann der Backend-Server basierend auf der Abrechnungsinformation die übertragene elektrische Energie und das Fahrzeug bestimmen. Darauf basierend kann der Backend-Server beispielsweise Energiekosten für die übertragene elektrische Energie bestimmen (z.B. Stromkosten gemäß einem bestimmten Stromtarif berechnen), wobei diese Stromkosten von dem identifizierten Fahrzeug abhängen. Zum Beispiel kann ein Stromtarif, auf welchem basierend die Stromkosten für die übertragene elektrische Energie bestimmt werden, basierend auf dem identifizierten Fahrzeug ausgewählt werden.

Vorteilhafterweise kann auf diese Weise mittels der Abrechnungsinformation beispielsweise kommuniziert werden, für welches Fahrzeug welche Menge an elektrischer Energie innerhalb eines bestimmten Ladevorgangs übertragen wurde und dementsprechend abgerechnet werden soll. Dabei kann bei der Berechnung und/oder Abrechnung von Energiekosten vorteilhafterweise zwischen verschiedenen Fahrzeugen unterschieden werden und in Abhängigkeit vom betreffenden Fahrzeug eine individuelle Abrechnung erfolgen.

In einer beispielhaften Ausführungsform gemäß der vorliegenden Offenbarung umfasst die Vorrichtung ferner Speichermittel, wobei die Speichermittel eingerichtet sind zum Speichern einer Vielzahl von Fahrzeugkennungen umfassend die zweite Fahrzeugkennung.

Wie oben beschrieben identifiziert die zweite Fahrzeugkennung beispielsweise ein bestimmtes Fahrzeug, für welches eine gesonderte Abrechnung der elektrischen Energie zum Aufladen einer Batterie dieses Fahrzeugs erfolgen darf. Zum Beispiel kann die zweite Fahrzeugkennung ein bestimmtes Fahrzeug eines Mitarbeiters eines Unternehmens identifizieren, für welches es dem Mitarbeiter gestattet ist, die Kosten für das Aufladen der elektrischen Batterie dieses Fahrzeugs über das Unternehmen abzurechnen. Ebenso wie diese zweite Fahrzeugkennung kann beispielsweise jede Fahrzeugkennung der Vielzahl von Fahrzeugkennungen ein jeweiliges Fahrzeug identifizieren, für welches eine gesonderte Abrechnung der elektrischen Energie zum Aufladen einer Batterie des jeweiligen Fahrzeugs erfolgen darf.

Als Teil des Bestimmens, ob die erste Fahrzeugkennung mit der zweiten Fahrzeugkennung übereinstimmt, kann beispielsweise ein Vergleichen der ersten Fahrzeugkennung mit zumindest einer (z.B. mit jeder) Fahrzeugkennung der Vielzahl an Fahrzeugkennungen erfolgen. Beispielsweise können die Fahrzeugkennungen der Vielzahl von Fahrzeugkennungen einzeln mit der ersten Fahrzeugkennung verglichen werden, um zu bestimmen, ob für eine bestimmte Fahrzeugkennung eine Überstimmung mit der ersten Fahrzeugkennung vorliegt Aus einem solchen Vergleich kann beispielsweise folgen, dass eine bestimmte Fahrzeugkennung der Vielzahl an Fahrzeugkennungen als zweite Fahrzeugkennung mit der ersten Fahrzeugkennung übereinstimmt.

Vorteilhafterweise kann mittels der Vielzahl an in der Vorrichtung abgespeicherten Fahrzeugkennungen bei Ladevorgängen von verschiedenen Fahrzeugen für mehrere Fahrzeuge eine individuelle Abrechnung der Stromkosten für das Aufladen dieser Fahrzeuge erreicht werden. Insbesondere kann für eine Vielzahl an Fahrzeugen festgelegt werden, ob eine gesonderte Abrechnung der Stromkosten für das Aufladen dieser Fahrzeuge gestattet ist.

In einer beispielhaften Ausführungsform gemäß der vorliegenden Offenbarung umfasst die Vorrichtung ferner Kommunikationsmittel, wobei die Kommunikationsmittel eingerichtet sind, die bereitgestellte Abrechnungsinformation an einen Backend-Server zu übertragen.

Zum Beispiel umfasst die Vorrichtung gemäß der vorliegenden Offenbarung Kommunikationsmittel, welche das Senden und/oder Empfangen von elektronischer Information an der Vorrichtung ermöglichen. Beispielsweise sind die Kommunikationsmittel der Vorrichtung eingerichtet, eine Kommunikationsverbindung zwischen der Vorrichtung und dem Backend-Server bereitzustellen. Zum Beispiel umfassen die Kommunikationsmittel eine Funkschnittstelle zur Kommunikation gemäß einem Mobilfunkstandard (z.B. dem 3G, 4G oder 5G Standard) oder gemäß einer anderen drahtlosen Funkkommunikationstechnologie (z.B. WiFi). Alternativ oder zusätzlich umfassen die Kommunikationsmittel eine Schnittstelle zur Kommunikation gemäß einer drahtgebundenen Technologie (z.B. USB oder Ethernet).

Eine Kommunikationsverbindung zwischen der Vorrichtung und dem Backend-Server ist beispielsweise zumindest in Teilen als drahtlose Kommunikationsverbindung ausgebildet und wird dabei über ein Mobilfunknetzwerk bereitgestellt. In einem anderen Beispiel kann eine Kommunikationsverbindung zwischen der Vorrichtung und dem Backend-Server auch eine ausschließlich drahtgebundene Kommunikationsverbindung sein, welche zum Beispiel Informationen von der Vorrichtung zunächst an die Ladevorrichtung und von der Ladevorrichtung an den Backend-Server (z.B. über eine kabelgebundene Internetleitung zwischen dem Backend-Server und einem Gebäude, in dem sich die Ladevorrichtung befindet) überträgt

In einer beispielhaften Ausführungsform gemäß der vorliegenden Offenbarung umfasst die Vorrichtung ferner Messmittel, wobei die Messmittel eingerichtet sind, die an das Fahrzeug übertragene elektrische Energie zu erfassen und die Ladeinformation zu bestimmen.

Zum Beispiel umfasst die Vorrichtung gemäß der vorliegenden Offenbarung Messmittel, welche elektronische Informationen (z.B. eine Ladeinformation) bestimmen und anschließend an die Vorrichtung bereitstellen können. Beispielsweise umfassen die Messmittel einen Stromzähler, welcher eingerichtet ist, die über ein Ladekabel von einer Ladevorrichtung an ein Fahrzeug übertragene elektrische Energie zu erfassen (z.B. zu messen). Ein solcher Stromzähler umfasst beispielsweise mehrere elektronische Bauteile, wie einen Messwandler, einen Analog-Digital-Wandler, einen Prozessor und/oder einen internen elektronischen Speicher.

In einer beispielhaften Ausführungsform gemäß der vorliegenden Offenbarung umfasst die Vorrichtung ferner Verbindungsmittel, wobei die Verbindungsmittel eingerichtet sind, die Vorrichtung mit dem Fahrzeug und die Vorrichtung mit der Ladevorrichtung zu verbinden.

Zum Beispiel können die Verbindungsmittel der Vorrichtung gemäß der vorliegenden Offenbarung ein oder mehrere elektrische Kabel (z.B. elektrische Ladekabel zum Aufladen eines Elektrofahrzeugs) umfassen oder zumindest ein oder mehrere Kabelabschnitte eines solchen elektrischen Kabels umfassen. Solche Kabel oder Kabelabschnitte können die Vorrichtung beispielsweise mit einem Fahrzeug und mit einer Ladevorrichtung elektrisch verbinden, sodass von der Ladevorrichtung bereitgestellte elektrische Energie an das Fahrzeug übertragen werden kann.

In anderen Beispielen können die Verbindungsmittel zusätzlich oder alternativ ein oder mehrere Steckverbinder umfassen, mit welchen elektrische Kabel (z.B. ein Ladekabel) mit der Vorrichtung verbunden und anschließend wieder von der Vorrichtung getrennt werden kann. Beispielsweise können Steckverbinder der Vorrichtung direkt mit der Ladevorrichtung und/oder direkt mit dem Fahrzeug verbunden werden (d.h. ohne die Verwendung von elektrischen Kabeln), sodass die Vorrichtung beispielsweise mittels einer Steckverbindung direkt mit einer Ladevorrichtung (oder mit einem Fahrzeug) verbunden werden kann, während eine zweite Steckverbindung der Vorrichtung die Vorrichtung mittels eines elektrischen Kabels mit dem Fahrzeug (oder mit der Ladevorrichtung) verbindet.

Zum Beispiel sind Steckverbinder der Verbindungsmittel gemäß einem gängigen Steckertyp für den Anschluss von Elektrofahrzeugen an eine Ladevorrichtung ausgestaltet (z.B. Typ 1, Typ2, CHAdeMO oder CCS). In anderen Beispielen können die Verbindungsmittel auch andere Steckertypen zum Herstellen einer elektrischen Verbindung (z.B. ein Schuko-Stecker Typ F) umfassen.

In einer beispielhaften Ausführungsform gemäß der vorliegenden Offenbarung sind die Mittel der Vorrichtung ferner eingerichtet zum Empfangen der ersten Fahrzeugkennung von dem Fahrzeug.

Zum Beispiel empfängt die Vorrichtung gemäß der vorliegenden Offenbarung die erste Fahrzeugkennung von dem Fahrzeug, wobei die erste Fahrzeugkennung dieses Fahrzeug identifiziert Die erste Fahrzeugkennung wird dabei beispielsweise über einen Kabelabschnitt eines Ladekabels, welcher die Vorrichtung mit dem Fahrzeug verbindet, an die Vorrichtung übertragen. Zum Beispiel kann diese Übertragung gemäß dem ISO 15118 Protokoll erfolgen, wobei die erste Fahrzeugkennung beispielsweise durch den *"Electric Vehicle Identifier (EVID)"* gegeben sein kann.

In einer beispielhaften Ausführungsform gemäß der vorliegenden Offenbarung sind die Mittel der Vorrichtung ferner eingerichtet zum:
- Erhalten einer Positionsinformation, wobei die Positionsinformation eine Position der Vorrichtung anzeigt;
- Bestimmen, ob sich die Position der Vorrichtung innerhalb eines vorgegebenen Positionsbereiches befindet; und
- Bereitstellen der Abrechnungsinformation, wenn zusätzlich bestimmt wird, dass sich die Position der Vorrichtung innerhalb eines vorgegebenen Positionsbereiches befindet.

Zum Beispiel erhält die Vorrichtung gemäß der vorliegenden Offenbarung die Positionsinformation von einem Positionssensor, welcher Teil der Vorrichtung ist oder mit der Vorrichtung verbunden ist. Ein solcher Positionssensor kann beispielsweise ein GPS-Sensor sein, welcher eine gegenwärtige Position des Positionssensors und damit der Vorrichtung erfasst und darauf basierend die Positionsinformation bestimmt, wobei die Positionsinformation die Position der Vorrichtung beispielsweise anhand von mehreren Positionskoordinaten anzeigt.

Weiterhin bestimmt die Vorrichtung beispielsweise, ob sich die von der zuvor erhaltenen Positionsinformation angezeigte Position der Vorrichtung innerhalb eines vorgegebenen Positionsbereichs befindet. Dazu können zum Beispiel in einem elektronischen Speicher der Vorrichtung Positionskoordinaten abgespeichert sein, welche den vorgegebenen Positionsbereich (z.B. einen geografischen Bereich) wiedergeben. Zum Beispiel werden die Positionskoordinaten, welche den vorgegebenen Bereich wiedergeben, mit den Positionskoordinaten der zuvor erhaltenen Positionsinformation verglichen.

Alternativ oder zusätzlich kann das Bestimmen, ob sich die Position der Vorrichtung innerhalb eines vorgegebenen Positionsbereiches befindet, zum Beispiel an dem Backend-Server erfolgen. In einem solchen Fall überträgt die Vorrichtung beispielsweise die zuvor erhaltene Positionsinformation an den Backend-Server, welcher diese Positionsinformation mit dem vorgegebenen Positionsbereich vergleicht Zum Beispiel sind dazu Positionskoordinaten, die den vorgegebenen Positionsbereich wiedergeben, in einem elektronischen Speicher des Backend-Servers gespeichert.

Zum Beispiel wird anschließend eine Abrechnungsinformation wie oben beschrieben (z.B. nur dann) bereitgestellt, wenn die erste Fahrzeugkennung mit der zweiten Fahrzeugkennung übereinstimmt und wenn zusätzlich sich die Position der Vorrichtung innerhalb eines vorgegebenen Positionsbereiches befindet. Eine Kombination dieser beiden Bedingungen für das Bereitstellen mit weiteren Bedingungen ist ebenfalls denkbar.

Der vorgegebene Positionsbereich kann insbesondere als ein geografischer Bereich verstanden werden, innerhalb dessen eine Abrechnung der Energiekosten für das Aufladen des Fahrzeugs gestattet ist Vorteilhafterweise kann auf diese Weise zum Beispiel ein weiteres Sicherheitsmerkmal bereitgestellt werden, um Betrugsfälle von unerlaubten Abrechnungen der Stromkosten für das Aufladen von Elektrofahrzeugen über ein Unternehmen zu verhindern.

In einer beispielhaften Ausführungsform gemäß der vorliegenden Offenbarung umfasst die Vorrichtung ferner Positionierungsmittel, wobei die Positionierungsmittel eingerichtet sind, die Position der Vorrichtung zu erfassen und die Positionsinformation zu bestimmen.

Zum Beispiel umfasst die Vorrichtung gemäß der vorliegenden Offenbarung Positionierungsmittel, welche beispielsweise einen oder mehrere Sensoren zur Satellitenpositionierung (z.B. einen GPS-Sensor) umfassen, um die Positionskoordinaten der Vorrichtung zu einem bestimmten Zeitpunkt zu erfassen. Alternativ oder zusätzlich können die Positionierungsmittel eine Position der Vorrichtung zum Beispiel über Funktriangulation (z.B. basierend auf von einer Funkschnittstelle der Vorrichtung empfangenen Mobilfunksignalen) bestimmen.

In einer beispielhaften Ausführungsform gemäß der vorliegenden Offenbarung sind die Mittel der Vorrichtung ferner eingerichtet zum:
- Erhalten einer ersten Ladevorrichtungskennung, welche die Ladevorrichtung identifiziert; und
- Bereitstellen der Abrechnungsinformation, wenn zusätzlich bestimmt wird, dass die erste Ladevorrichtungskennung mit einer zweiten Ladevorrichtungskennung übereinstimmt.

Zum Beispiel erhält die Vorrichtung gemäß der vorliegenden Offenbarung eine erste Ladevorrichtungskennung von der Ladevorrichtung, wobei die erste Ladevorrichtungskennung die Ladevorrichtung identifiziert. Die erste Ladevorrichtungskennung wird dabei beispielsweise von der Ladevorrichtung über einen Kabelabschnitt eines Ladekabels an die Vorrichtung übertragen. Die Übertragung kann beispielweise gemäß dem ISO 15118-Protokoll erfolgen, wobei die erste Ladevorrichtungskennung durch den *"Charge Point Identifier (CPID)"* gegeben sein kann. Die Übertragung der Ladevorrichtungskennung ist jedoch nicht an ein bestimmtes Protokoll gebunden, sodass beispielsweise eine Unterstützung des ISO 15118-Protokolls durch die Ladevorrichtung nicht erforderlich ist

Zum Beispiel wird anschließend eine Abrechnungsinformation wie oben beschrieben (z.B. nur dann) bereitgestellt, wenn die erste Fahrzeugkennung mit der zweiten Fahrzeugkennung übereinstimmt und wenn zusätzlich die erste Ladevorrichtungskennung mit einer zweiten Ladevorrichtungskennung übereinstimmt

Zum Beispiel identifiziert die zweite Ladevorrichtungskennung eine bestimmte Ladevorrichtung, für welche eine gesonderte Abrechnung der elektrischen Energie zum Aufladen einer Batterie eines Fahrzeugs erfolgen darf. Zum Beispiel kann die zweite Ladevorrichtungskennung eine private Ladestation eines Mitarbeiters eines Unternehmens identifizieren, für welche es dem Mitarbeiter gestattet ist, die Kosten für das Aufladen der elektrischen Batterie eines Fahrzeugs über das Unternehmen abrechnen zu lassen. Vorteilhafterweise kann auf diese Weise zum Beispiel ein weiteres Sicherheitsmerkmal bereitgestellt werden, um Betrugsfälle von unerlaubten Abrechnungen der Stromkosten für das Aufladen von Elektrofahrzeugen über ein Unternehmen zu verhindern.

Zum Beispiel ist eine Kombination mehrerer Bedingungen für das Bereitstellen einer Abrechnungsinformation möglich. So kann beispielsweise eine Kombination von Bedingungen vorliegen, sodass ein Bereitstellen einer Abrechnungsinformation (z.B. nur dann) erfolgt, wenn i) die erste Fahrzeugkennung mit der zweiten Fahrzeugkennung übereinstimmt, wenn ii) zusätzlich sich die Position der Vorrichtung innerhalb eines vorgegebenen Positionsbereiches befindet und wenn iii) zusätzlich die erste Ladevorrichtungskennung mit der zweiten Ladevorrichtungskennung übereinstimmt Vorteilhafterweise können auf diese Weise die Sicherheitsmaßnahmen weiter erhöht werden, um Betrugsfälle von unerlaubten Abrechnungen der Stromkosten für das Aufladen von Elektrofahrzeugen über ein Unternehmen zu verhindern.

In einer beispielhaften Ausführungsform gemäß der vorliegenden Offenbarung sind die Mittel der Vorrichtung ferner eingerichtet zum Bestimmen, ob die erste Ladevorrichtungskennung mit der zweiten Ladevorrichtungskennung übereinstimmt

Zum Beispiel bestimmt die Vorrichtung gemäß der vorliegenden Offenbarung, ob eine von der Ladevorrichtung erhaltene erste Ladevorrichtungskennung mit einer zweiten Ladevorrichtungskennung, welche in einem elektronischen Speicher der Vorrichtung abgespeichert ist, übereinstimmt Eine solche Übereinstimmung liegt beispielsweise vor, wenn die ersten Ladevorrichtungskennung gleich der zweiten Ladevorrichtungskennung ist oder wenn die erste Ladevorrichtungskennung und die zweite Ladevorrichtungskennung dieselbe Ladevorrichtung identifizieren. Alternativ oder zusätzlich kann das Bestimmen, ob die erste Ladevorrichtungskennung mit der zweiten Ladevorrichtungskennung übereinstimmt, zum Beispiel an einem Backend-Server erfolgen. In einem solchen Beispiel überträgt die Vorrichtung die erhaltene erste Ladevorrichtungskennung an den Backend-Server, welcher die erste Ladevorrichtungskennung mit einer zweiten Ladevorrichtungskennung vergleicht Dazu ist die zweite Ladevorrichtungskennung beispielsweise in einem elektronischen Speicher des Backend-Servers gespeichert.

In einer beispielhaften Ausführungsform gemäß der vorliegenden Offenbarung umfasst die Vorrichtung ferner Speichermittel, wobei die Speichermittel eingerichtet sind zum Speichern einer Vielzahl von Ladevorrichtungskennungen umfassend die zweite Ladevorrichtungskennung.

Wie oben beschrieben identifiziert die zweite Ladevorrichtungskennung zum Beispiel eine bestimmte Ladevorrichtung, für welche eine gesonderte Abrechnung der elektrischen Energie zum Aufladen einer Batterie eines Fahrzeugs erfolgen darf. Zum Beispiel kann die zweite Ladevorrichtungskennung eine private Ladestation eines Mitarbeiters eines Unternehmens identifizieren, für welche es dem Mitarbeiter gestattet ist, die Kosten für das Aufladen der elektrischen Batterie eines Fahrzeugs über das Unternehmen abrechnen zu lassen. Ebenso wie diese zweite Ladevorrichtungskennung kann beispielsweise jede Ladevorrichtungskennung der Vielzahl von Ladevorrichtungskennung eine jeweilige Ladevorrichtung identifizieren, für welche es dem Mitarbeiter gestattet ist, die Kosten für das Aufladen der elektrischen Batterie eines Fahrzeugs über das Unternehmen abrechnen zu lassen.

Als Teil des Bestimmens, ob die erste Ladevorrichtungskennung mit der zweiten Ladevorrichtungskennung übereinstimmt, kann beispielsweise ein Vergleichen der ersten Ladevorrichtungskennung mit zumindest einer (z.B. mit jeder) Ladevorrichtungskennung der Vielzahl an Ladevorrichtungskennungen erfolgen. Beispielsweise können die Ladevorrichtungskennungen der Vielzahl von Ladevorrichtungskennungen einzeln mit der ersten Ladevorrichtungskennung verglichen werden, um zu bestimmen, ob für eine bestimmte Ladevorrichtungskennung eine Überstimmung mit der ersten Ladevorrichtungskennung vorliegt Aus einem solchen Vergleich kann beispielsweise folgen, dass eine bestimmte Ladevorrichtungskennung der Vielzahl an Ladevorrichtungskennungen als zweite Ladevorrichtungskennung mit der ersten Ladevorrichtungskennung übereinstimmt.

Vorteilhafterweise kann mittels der Vielzahl an in der Vorrichtung abgespeicherten Ladevorrichtungskennung für eine Vielzahl von Ladevorrichtungen in der Vorrichtung hinterlegt sein, dass für Ladevorgänge mit diesen Ladevorrichtungen eine gesonderte Abrechnung der elektrischen Energie zum Aufladen einer Batterie eines Fahrzeugs erfolgen darf.

In einer beispielhaften Ausführungsform gemäß der vorliegenden Offenbarung ist die Vorrichtung zumindest ein Teil eines Ladekabels zum Aufladen eines elektrischen Speichers des Fahrzeugs, oder mit einem Ladekabel zum Aufladen eines elektrischen Speichers des Fahrzeugs verbindbar.

Die Vorrichtung gemäß der vorliegenden Offenbarung ist zum Beispiel mit einem oder mit mehreren Kabelabschnitten (z.B. Kabelabschnitte eines Ladekabels für Elektrofahrzeuge) verbindbar. In einem anderen Beispiel kann ein gesamtes Ladekabel umfassend ein oder mehrere Kabelabschnitte als Vorrichtung gemäß der vorliegenden Offenbarung verstanden werden. In einem weiteren Beispiel kann die Vorrichtung gemäß der vorliegenden Offenbarung als ein einzelnes elektronisches Bauteil verstanden werden, welches Teil einer weiteren Vorrichtung (z.B. eingebaut in einem entsprechenden Gehäuse) ist. Es ist außerdem denkbar, dass die Vorrichtung gemäß der vorliegenden Offenbarung in ein Ladekabel für ein Elektrofahrzeug integriert ist, sodass sie beispielsweise nach außen hin nicht als Vorrichtung erkennbar ist

Weiterhin wird gemäß der vorliegenden Offenbarung ein System offenbart, wobei ein solches System zumindest die Vorrichtung gemäß der vorliegenden Offenbarung umfasst. Weiterhin kann das System beispielsweise eine Ladevorrichtung, ein Fahrzeug, einen Backend-Server und/oder ein Ladekabel umfassen.

Die oben beschriebenen Ausführungsbeispiele und beispielhaften Ausgestaltungen der vorliegenden Offenbarung sollen auch in allen Kombinationen miteinander offenbart verstanden werden. Insbesondere gilt die Offenbarung eines Verfahrensschrittes auch als Offenbarung von Mitteln zur Durchführung des jeweiligen Verfahrensschritts. Ebenso gilt die Offenbarung von Mitteln zur Durchführung eines Verfahrensschritts auch als Offenbarung des Verfahrensschritts selbst

Weitere vorteilhafte beispielhafte Ausgestaltungen der vorliegenden Offenbarung sind der folgenden detaillierten Beschreibung einiger beispielhafter Ausführungsformen insbesondere in Verbindung mit den Figuren zu entnehmen. Die beiliegenden Figuren sollen jedoch nur dem Zwecke der Verdeutlichung, nicht aber zur Bestimmung des Schutzbereiches der Ansprüche dienen. Die beiliegenden Zeichnungen sind nicht notwendigerweise maßstabsgetreu und sollen lediglich das allgemeine Konzept der vorliegenden Offenbarung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Umgebung, in welcher eine Vorrichtung gemäß der vorliegenden Offenbarung verwendet werden kann;
- Fig. 2: ein Flussdiagramm einer beispielhaften Ausführungsform eines Verfahrens gemäß der vorliegenden Offenbarung;
- Fig. 3: ein Flussdiagramm einer weiteren beispielhaften Ausführungsform eines Verfahrens gemäß der vorliegenden Offenbarung;
- Fig. 4: ein Flussdiagramm einer weiteren beispielhaften Ausführungsform eines Verfahrens gemäß der vorliegenden Offenbarung;
- Fig. 5: eine schematische Darstellung einer beispielhaften Ausführungsform der Vorrichtung gemäß der vorliegenden Offenbarung; und
- Fig. 6: beispielhafte Ausführungsformen von Speichermedien.

### Detaillierte Beschreibung einiger beispielhafter Ausführungsformen

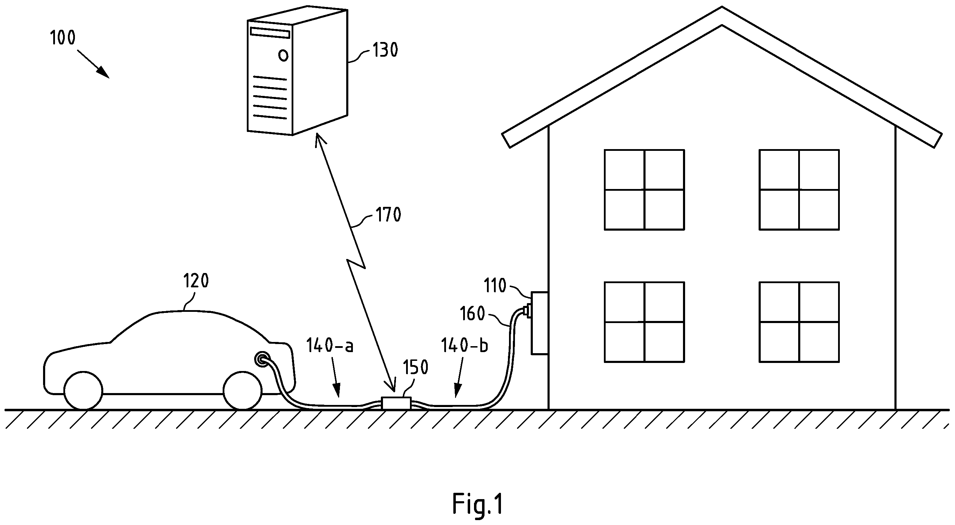

Fig. 1 zeigt eine schematische Darstellung einer beispielhaften Umgebung 100, in welcher eine Vorrichtung 150 gemäß der vorliegenden Offenbarung verwendet werden kann.

Fig. 1 zeigt eine Ladevorrichtung 110, welche über ein Ladekabel 160 mit dem Fahrzeug 120 verbunden ist Das Ladekabel 160 setzt sich beispielhaft aus den Kabelabschnitten 140a und 140b zusammen, welche die Vorrichtung 150 mit der Ladevorrichtung 110 und dem Fahrzeug 120 verbinden. Weiterhin ist in Fig. 1 ein Backend-Server 130 gezeigt, welcher mit der Vorrichtung 150 über einen Kommunikationspfad 170 (z.B. mittels eines Mobilfunknetzwerks) Informationen austauschen kann.

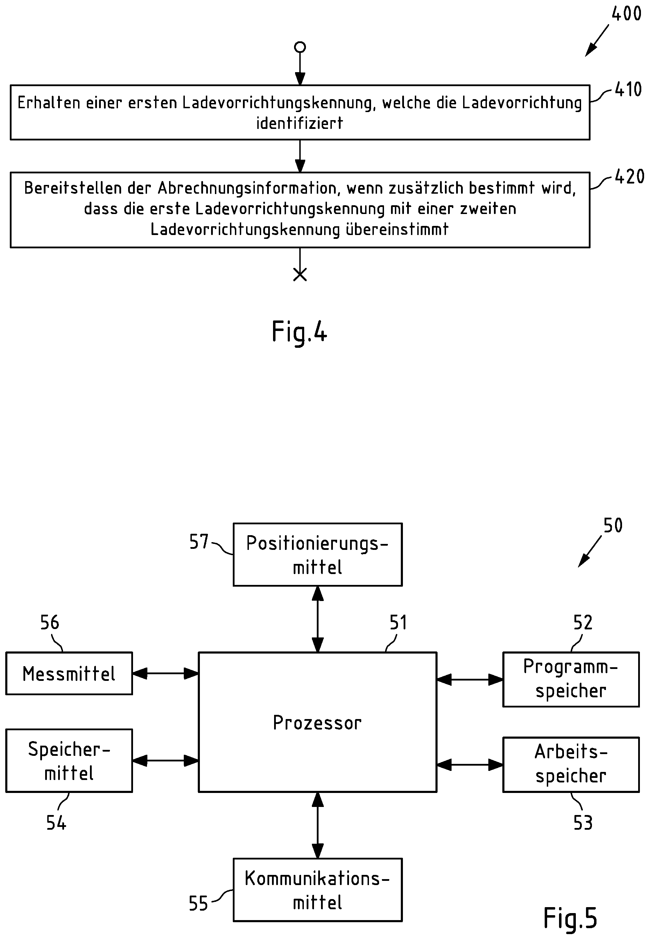

Die Vorrichtung 150 ist beispielhaft als Vorrichtung gemäß der vorliegenden Offenbarung zu verstehen, wobei die Vorrichtung 150 wie gezeigt mit den beiden Kabelabschnitten 140a, 140b verbindbar ist. In einem anderen Beispiel kann das gesamte Ladekabel 160 umfassend die Kabelabschnitte 140a, 140b und die Vorrichtung 150 als Vorrichtung gemäß der vorliegenden Offenbarung verstanden werden. In einem weiteren Beispiel kann die Vorrichtung gemäß der vorliegenden Offenbarung nur ein Teil (z.B. ein einzelnes elektronisches Bauteil wie in Fig. 5 schematisch als Vorrichtung 50 dargestellt) der Vorrichtung 150 sein. Es ist außerdem denkbar, dass die Vorrichtung 150 in das Ladekabel 160 integriert ist, sodass sie anders als in Fig. 1 beispielhaft dargestellt nach außen hin nicht als Vorrichtung erkennbar ist

Die Ladevorrichtung 110 ist beispielhaft als Ladestation gezeigt, welche elektrische Energie zum Aufladen der Batterie von Elektrofahrzeugen bereitstellt. Die Ladevorrichtung 110 kann als private Ladestation (z.B. eine Wallbox oder eine Steckdose wie z.B. eine Starkstromsteckdose) verstanden werden, welche für den privaten Gebrauch konzipiert ist und an einer Wand installiert ist In anderen Beispielen kann die Ladevorrichtung 110 eine öffentliche Ladestation (z.B. eine Schnellladestation) sein.

Die von der Ladevorrichtung 110 bereitgestellte elektrische Energie wird über das Ladekabel 160 an das Fahrzeug 120 übertragen. Das Fahrzeug 120 ist beispielhaft als Elektrofahrzeug mit einem elektrischen Antrieb gezeigt, wobei die elektrische Energie für den Antrieb von einer oder mehreren elektrischen Batterien des Fahrzeugs 120 bereitgestellt wird. Über das Ladekabel 160 kann demnach elektrische Energie an das Fahrzeug 120 zum Aufladen der einen oder mehreren Batterien des Fahrzeugs 120 übertragen werden.

Der Backend-Server 130 ist zum Beispiel ein Verwaltungsserver, an dem Abrechnungsinformationen über eine Vielzahl von Ladevorgängen von einer Vielzahl von Elektrofahrzeugen erhalten und verwaltet werden. Wie in Fig. 1 beispielhaft gezeigt besteht zwischen der Vorrichtung 150 und dem Backend-Server 130 eine Kommunikationsverbindung 170, über welche die Vorrichtung 150 Abrechnungsinformationen an den Backend-Server 130 übertragen kann.

Die Kommunikationsverbindung 170 ist beispielsweise zumindest in Teilen als drahtlose Kommunikationsverbindung ausgebildet und wird dabei über ein Mobilfunknetzwerk bereitgestellt. Insbesondere nutzt die Kommunikationsverbindung 170 die Mobilfunkinfrastruktur eines Mobilfunknetzes (z.B. ein oder mehrere Basisstationen), um Informationen gemäß einem Mobilfunkstandard (z.B. dem 3G, 4G oder 5G Mobilfunkstandard) von der Vorrichtung 150 an den Backend-Server 130 zu übertragen. In einem anderen Beispiel kann die Kommunikationsverbindung 170 zwischen der Vorrichtung 150 und dem Backend-Server 130 auch eine ausschließlich drahtgebundene Kommunikationsverbindung sein, welche Informationen von der Vorrichtung 150 zunächst an die Ladevorrichtung 110 und von der Ladevorrichtung 110 an den Backend-Server 130 (z.B. über eine kabelgebundene Internetleitung zwischen dem Backend-Server 130 und einem Gebäude, in dem sich die Ladevorrichtung 110 befindet) überträgt.

Für die beispielhaft gezeigte Umgebung 100 kann angenommen werden, dass es sich bei der Ladevorrichtung 110 um eine private Ladestation handelt, welche beispielsweise am Wohngebäude eines Mitarbeiters eines Unternehmens installiert ist. Außerdem kann es sich bei dem Fahrzeug 120 weiterhin um ein Elektrofahrzeug dieses Mitarbeiters handeln (z.B. ist das Fahrzeug 120 ein Firmenfahrzeug), wobei es dem Mitarbeiter gestattet ist, die Kosten für das Aufladen der elektrischen Batterie dieses Fahrzeugs 120 (und z.B. nicht für andere Fahrzeuge) mittels der privaten Ladestation 110 über das Unternehmen abrechnen zu lassen. Demnach soll zum Beispiel für Ladevorgänge dieses Fahrzeugs 120 (und z.B. nicht für Ladevorgänge anderer Fahrzeuge) an der Ladevorrichtung 110 eine Abrechnungsinformation, welche die während eines Ladevorgangs übertragene elektrische Energie repräsentiert, an einen Backend-Server 130 kommuniziert werden. Dabei wird der Backend-Server 130 beispielsweise von dem Unternehmen betrieben.

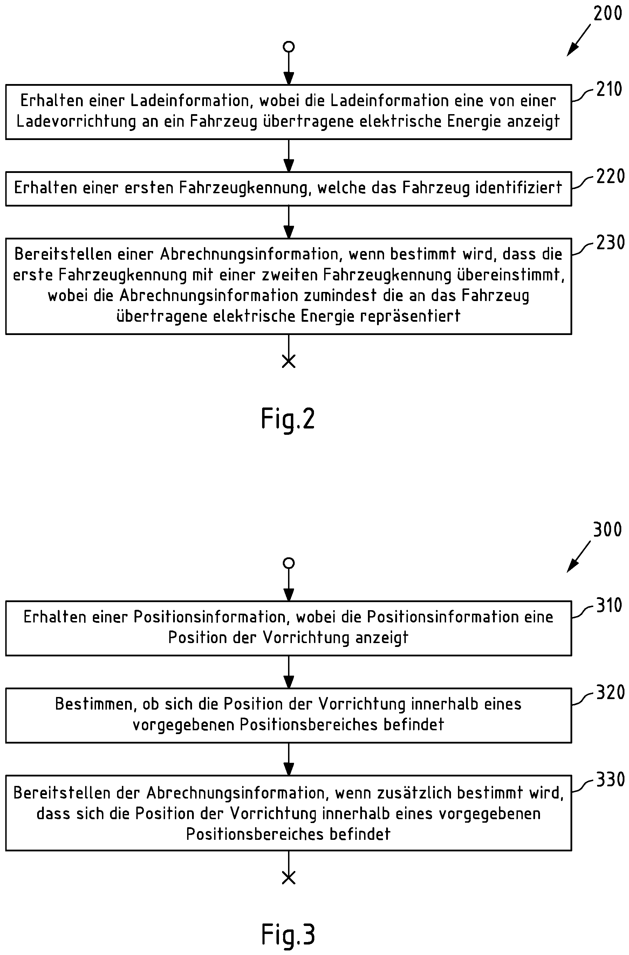

Fig. 2 zeigt ein Flussdiagramm einer beispielhaften Ausführungsform eines Verfahrens 200 gemäß der vorliegenden Offenbarung. Nachfolgend werden die Verfahrensschritte 210, 220 und 230 beispielhaft in Bezug auf die in Fig. 1 gezeigte Umgebung 100 beschrieben. Dabei wird beispielhaft angenommen, dass die Verfahrensschritte 210, 220 und 230 von der Vorrichtung 150 durchgeführt werden.

Schritt 210 umfasst ein Erhalten einer Ladeinformation, wobei die Ladeinformation eine von einer Ladevorrichtung an ein Fahrzeug übertragene elektrische Energie anzeigt.

Zum Beispiel erhält die Vorrichtung 150 in Schritt 210 die Ladeinformation von einem elektrischen Stromzähler, welcher Teil der Vorrichtung 150 oder mit der Vorrichtung 150 verbunden ist Ein solcher Stromzähler ist eingerichtet, die über das Ladekabel 160 von der Ladevorrichtung 110 an das Fahrzeug 120 übertragene elektrische Energie zu erfassen (z.B. zu messen). Dabei kann es sich beispielsweise um die elektrische Energie handeln, die während eines bestimmten Ladevorgangs von der Ladevorrichtung 110 an das Fahrzeug 120 übertragen wird. Der Stromzähler bestimmt beispielsweise basierend auf der erfassten elektrischen Energie die Ladeinformation und überträgt diese Ladeinformation in Schritt 210 an die Vorrichtung 150.

Die in Schritt 210 erhaltene Ladeinformation ist als elektronisch kodierte Information zu verstehen, welche die durch den Stromzähler gemessene elektrische Energie anzeigt und somit die von der Ladevorrichtung 110 and das Fahrzeug 120 übertragene elektrische Energie anzeigt.

Dabei kann die Ladeinformation die elektrische Energie zum Beispiel als Zahlenwert in einer physikalischen Einheit (z.B. kWh) anzeigen.

Schritt 220 umfasst ein Erhalten einer ersten Fahrzeugkennung, welche das Fahrzeug identifiziert

Zum Beispiel erhält die Vorrichtung 150 in Schritt 220 die erste Fahrzeugkennung von dem Fahrzeug 120, wobei die erste Fahrzeugkennung das Fahrzeug 120 identifiziert Die erste Fahrzeugkennung wird dabei insbesondere über den Kabelabschnitt 140a des Ladekabels 160 an die Vorrichtung 150 übertragen. Die Übertragung kann beispielhaft gemäß dem ISO 15118 Protokoll erfolgen, wobei die erste Fahrzeugkennung durch den *"Electric Vehicle Identifier (EVID)"* gegeben sein kann. Die in Schritt 220 erhaltene Fahrzeugkennung ist als elektronisch kodierte Information zu verstehen, auf welcher basierend das Fahrzeug 120 eindeutig identifizierbar ist

Schritt 230 umfasst ein Bereitstellen einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug übertragene elektrische Energie repräsentiert

Zum Beispiel bestimmt die Vorrichtung 150, ob die in Schritt 220 von dem Fahrzeug 120 erhaltene erste Fahrzeugkennung mit einer zweiten Fahrzeugkennung, welche in einem elektronischen Speicher der Vorrichtung 150 abgespeichert ist, übereinstimmt Eine solche Übereinstimmung kann vorliegen, wenn die erste Fahrzeugkennung gleich der zweiten Fahrzeugkennung ist oder wenn die erste Fahrzeugkennung und die zweite Fahrzeugkennung dasselbe Fahrzeug 120 identifizieren. Falls die erste Fahrzeugkennung mit der zweiten Fahrzeugkennung übereinstimmt, stellt die Vorrichtung 150 eine Abrechnungsinformation bereit, wobei die Abrechnungsinformation zumindest die von der Ladevorrichtung 110 an das Fahrzeug 120 übertragene elektrische Energie repräsentiert.

Alternativ oder zusätzlich kann das Bestimmen, ob die erste Fahrzeugkennung mit der zweiten Fahrzeugkennung übereinstimmt, an dem Backend-Server 130 erfolgen. In einem solchen Fall überträgt die Vorrichtung 150 als Teil des Schritts 230 zum Beispiel die in Schritt 220 erhaltene erste Fahrzeugkennung an den Backend-Server 130, welcher die erste Fahrzeugkennung mit einer zweiten Fahrzeugkennung vergleicht Dazu ist die zweite Fahrzeugkennung beispielsweise in einem elektronischen Speicher des Backend-Servers 130 gespeichert

Zum Beispiel identifiziert die zweite Fahrzeugkennung ein bestimmtes Fahrzeug 120, für welches eine gesonderte Abrechnung der elektrischen Energie zum Aufladen einer Batterie dieses Fahrzeugs erfolgen darf. Gemäß der obigen Beschreibung zu Fig. 1 kann die zweite Fahrzeugkennung beispielsweise ein bestimmtes Fahrzeug 120 eines Mitarbeiters eines Unternehmens identifizieren, für welches es dem Mitarbeiter gestattet ist, die Kosten für das Aufladen der elektrischen Batterie dieses Fahrzeugs 120 über das Unternehmen abzurechnen.

Das Bereitstellen der Abrechnungsinformation in Schritt 230 umfasst zum Beispiel ein Bestimmen (z.B. ein elektronisches Erzeugen) der Abrechnungsinformation zumindest teilweise basierend auf der in Schritt 210 erhaltenen Ladeinformation. Demnach repräsentiert die Abrechnungsinformation zumindest die von der Ladevorrichtung 110 an das Fahrzeug 120 übertragene elektrische Energie, die von der in Schritt 210 erhaltenen Ladeinformation angezeigt wird. Dazu kann die Abrechnungsinformation beispielsweise die elektrische Energie als Zahlenwert in einer physikalischen Einheit (z.B. kWh) anzeigen. In einem weiteren Beispiel kann die Abrechnungsinformation einen Kostenbetrag (z.B. in EUR) anzeigen, welcher die Energiekosten (z.B. Stromkosten gemäß einem bestimmten Stromtarifl für die übertragene elektrische Energie wiedergibt. Die in Schritt 230 bereitgestellte Abrechnungsinformation kann weitere Information oder Parameter umfassen, wie zum Beispiel die in Schritt 210 erhaltenen Fahrzeugkennung oder andere Parameter, die einen Ladevorgang zwischen der Ladevorrichtung 110 und dem Fahrzeug 120 betreffen.

Das Bereitstellen der Abrechnungsinformation in Schritt 230 umfasst beispielsweise das Übertragen der Abrechnungsinformation über die Kommunikationsverbindung 170 an den Backend-Server 130, an welchem die Abrechnungsinformation weiterverarbeitet wird (um z.B. eine Erstattung der Energiekosten zu ermöglichen). Dazu können in Schritt 230 Kommunikationsmittel (z.B. eine Mobilfunkschnittstelle) der Vorrichtung 150 verwendet werden.

Falls in Schritt 230 festgestellt wird, dass die erste Fahrzeugkennung nicht mit der zweiten Fahrzeugkennung übereinstimmt, erfolgt kein Bereitstellen der Abrechnungsinformation. Zum Beispiel wird die Abrechnungsinformation in einem solchen Fall gar nicht erst bestimmt Es erfolgt dann insbesondere keine Übermittlung einer Abrechnungsinformation an den Backend-Server 130. Die Energiekosten für die übertragene elektrische Energie wie von der Ladeinformation angezeigt werden dann beispielsweise auf einem anderen Weg abgerechnet, auch wenn die Ladevorrichtung 110 dennoch für das Aufladen der Batterie des Fahrzeugs 120 verwendet werden kann. Insbesondere findet dann keine Abrechnung der Energiekosten über das Unternehmen des Mitarbeiters statt

Vorteilhafterweise kann durch die von der Vorrichtung 150 durchgeführten Schritte 210 bis 230 zum Beispiel eine Abrechnung der Stromkosten für das Aufladen des Fahrzeugs 120 auf den Fall beschränkt werden, in dem eine solche Abrechnung auch tatsächlich für das Fahrzeug 120 gestattet ist In einem solchen Fall kommuniziert die Vorrichtung 150 mit einem Backend-Server 130 des Unternehmens, sodass eine Abrechnung der Stromkosten über dieses Unternehmen erfolgt. Anderenfalls erfolgt keine Kommunikation mit dem Backend-Server 130 und auch keine entsprechende Abrechnung, das Ladekabel 160 kann aber vorteilhafterweise dennoch zum Laden des Fahrzeugs 120 verwendet werden.

Durch das Erkennen des Fahrzeugs 120 werden beispielsweise Betrugsfälle verhindert, in denen ein Mitarbeiter eines Unternehmens die Stromkosten für das Aufladen anderer Fahrzeuge, für welche eine Abrechnung der Stromkosten über das Unternehmen nicht gestattet ist, ebenfalls über das Unternehmen abzurechnen versucht Insbesondere findet demnach eine Erkennung auf Fahrzeugbasis und beispielsweise nicht auf Nutzerbasis statt

Die Vorrichtung 150 ermöglicht eine Fahrzeugerkennung zum Zweck der Abrechnung vorteilhafterweise unabhängig davon, ob die Ladevorrichtung 110 eine Fahrzeugerkennung technisch unterstützt. Beispielsweise handelt es sich bei der Ladevorrichtung 110 um eine private Ladestation (z.B. eine Wechselstrom-Ladestation oder z.B. eine Steckdose), welche aus technischen Gründen keine Fahrzeugerkennung unterstützt, weil sie beispielsweise entsprechende Kommunikationsprotokolle (z.B. das ISO 15118-Protokoll) für die Kommunikation zwischen Ladestation 110 und Fahrzeug 120 nicht oder nicht vollständig unterstützt. Durch die beschriebene Verwendung der Vorrichtung 150 kann vorteilhafterweise eine Erkennung eines Fahrzeugs 120 und eine gezielte Abrechnung unabhängig von der jeweiligen technischen Ausstattung der Ladevorrichtung 110 ermöglicht werden.

Fig. 3 zeigt ein Flussdiagramm einer beispielhaften Ausführungsform eines Verfahrens 300 gemäß der vorliegenden Offenbarung. Nachfolgend werden die Verfahrensschritte 310, 320 und 330 beispielhaft in Bezug auf die in Fig. 1 gezeigte Umgebung 100 beschrieben. Dabei wird beispielhaft angenommen, dass die Verfahrensschritte 310, 320 und 330 von der Vorrichtung 150 durchgeführt werden.

Schritt 310 umfasst ein Erhalten einer Positionsinformation, wobei die Positionsinformation eine Position der Vorrichtung anzeigt.

Zum Beispiel erhält die Vorrichtung 150 in Schritt 310 die Positionsinformation von einem Positionssensor, welcher Teil der Vorrichtung 150 ist oder mit der Vorrichtung 150 verbunden ist. Ein solcher Positionssensor kann ein GPS-Sensor sein, welcher eine gegenwärtige Position des Positionssensors und damit der Vorrichtung 150 erfasst und darauf basierend die Positionsinformation bestimmt, wobei die Positionsinformation die Position der Vorrichtung 150 anhand von mehreren Positionskoordinaten anzeigt.

Schritt 320 umfasst ein Bestimmen, ob sich die Position der Vorrichtung innerhalb eines vorgegebenen Positionsbereiches befindet.

Zum Beispiel bestimmt die Vorrichtung 150, ob sich die von der in Schritt 310 erhaltenen Positionsinformation angezeigte Position der Vorrichtung 150 innerhalb eines vorgegebenen Positionsbereichs befindet. Dazu können in einem elektronischen Speicher der Vorrichtung 150 Positionskoordinaten abgespeichert sein, welche den vorgegebenen Positionsbereich (z.B. einen geografischen Bereich) wiedergeben. In Schritt 320 werden dann die Positionskoordinaten, welche den vorgegebenen Bereich wiedergeben, mit den Positionskoordinaten der in Schritt 310 erhaltenen Positionsinformation verglichen.

Alternativ oder zusätzlich kann das Bestimmen, ob sich die Position der Vorrichtung innerhalb eines vorgegebenen Positionsbereiches befindet, an dem Backend-Server 130 erfolgen. In einem solchen Fall überträgt die Vorrichtung 150 als Teil des Schritts 320 zum Beispiel die in Schritt 310 erhaltene Positionsinformation an den Backend-Server 130, welcher diese Positionsinformation mit dem vorgegebenen Positionsbereich vergleicht Dazu sind Positionskoordinaten, die den vorgegebenen Positionsbereich wiedergeben, beispielsweise in einem elektronischen Speicher des Backend-Servers 130 gespeichert.

Schritt 330 umfasst ein Bereitstellen der Abrechnungsinformation, wenn zusätzlich bestimmt wird, dass sich die Position der Vorrichtung innerhalb eines vorgegebenen Positionsbereiches befindet.

Zum Beispiel wird gemäß Schritt 330 eine Abrechnungsinformation wie zu Schritt 230 in Fig. 2 beschrieben (z.B. nur dann) bereitgestellt, wenn die erste Fahrzeugkennung mit der zweiten Fahrzeugkennung übereinstimmt und wenn zusätzlich sich die Position der Vorrichtung 150 innerhalb eines vorgegebenen Positionsbereiches befindet Eine Kombination dieser beiden Bedingungen für das Bereitstellen mit weiteren Bedingungen ist ebenfalls denkbar.

Der vorgegebene Positionsbereich kann insbesondere als ein geografischer Bereich verstanden werden, innerhalb dessen eine Abrechnung der Energiekosten für das Aufladen des Fahrzeugs 120 gestattet ist Vorteilhafterweise stellen die Schritte 310 bis 330 zum Beispiel ein weiteres Sicherheitsmerkmal bereit, um Betrugsfälle von unerlaubten Abrechnungen der Stromkosten für das Aufladen von Elektrofahrzeugen über ein Unternehmen zu verhindern.

Fig. 4 zeigt ein Flussdiagramm einer beispielhaften Ausführungsform eines Verfahrens 400 gemäß der vorliegenden Offenbarung. Nachfolgend werden die Verfahrensschritte 410 und 420 beispielhaft in Bezug auf die in Fig. 1 gezeigte Umgebung 100 beschrieben. Dabei wird beispielhaft angenommen, dass die Verfahrensschritte 410 und 420 von der Vorrichtung 150 durchgeführt werden.

Schritt 410 umfasst ein Erhalten einer ersten Ladevorrichtungskennung, welche die Ladevorrichtung identifiziert.

Zum Beispiel erhält die Vorrichtung 150 in Schritt 410 die erste Ladevorrichtungskennung von der Ladevorrichtung 110, wobei die erste Ladevorrichtungskennung die Ladevorrichtung 110 identifiziert Die erste Ladevorrichtungskennung wird dabei insbesondere von der Ladevorrichtung 110 über den Kabelabschnitt 140b des Ladekabels 160 an die Vorrichtung 150 übertragen. Die Übertragung kann beispielhaft gemäß dem ISO 15118-Protokoll erfolgen, wobei die erste Ladevorrichtungskennung durch den *"Charge Point Identifier (CPID)"* gegeben sein kann. Die Übertragung der Ladevorrichtungskennung in Schritt 410 ist jedoch nicht an ein bestimmtes Protokoll gebunden, sodass beispielsweise eine Unterstützung des ISO 15118-Protokolls durch die Ladevorrichtung 110 nicht erforderlich ist.

Schritt 420 umfasst ein Bereitstellen der Abrechnungsinformation, wenn zusätzlich bestimmt wird, dass die erste Ladevorrichtungskennung mit einer zweiten Ladevorrichtungskennung übereinstimmt.

Zum Beispiel wird gemäß Schritt 420 eine Abrechnungsinformation wie zu Schritt 230 in Fig. 2 beschrieben (z.B. nur dann) bereitgestellt, wenn die erste Fahrzeugkennung mit der zweiten Fahrzeugkennung übereinstimmt und wenn zusätzlich die erste Ladevorrichtungskennung mit einer zweiten Ladevorrichtungskennung übereinstimmt

Zum Beispiel bestimmt die Vorrichtung 150, ob die in Schritt 410 von der Ladevorrichtung 110 erhaltene erste Ladevorrichtungskennung mit einer zweiten Ladevorrichtungskennung, welche in einem elektronischen Speicher der Vorrichtung 150 abgespeichert ist, übereinstimmt. Eine solche Übereinstimmung liegt beispielsweise vor, wenn die ersten Ladevorrichtungskennung gleich der zweiten Ladevorrichtungskennung ist oder wenn die erste Ladevorrichtungskennung und die zweite Ladevorrichtungskennung dieselbe Ladevorrichtung identifizieren. Alternativ oder zusätzlich kann das Bestimmen, ob die erste Ladevorrichtungskennung mit der zweiten Ladevorrichtungskennung übereinstimmt, an dem Backend-Server 130 erfolgen. In einem solchen Fall überträgt die Vorrichtung 150 als Teil des Schritts 420 zum Beispiel die in Schritt 410 erhaltene erste Ladevorrichtungskennung an den Backend-Server 130, welcher die erste Ladevorrichtungskennung mit einer zweiten Ladevorrichtungskennung vergleicht Dazu ist die zweite Ladevorrichtungskennung beispielsweise in einem elektronischen Speicher des Backend-Servers 130 gespeichert

Zum Beispiel identifiziert die zweite Ladevorrichtungskennung eine bestimmte Ladevorrichtung, für welche eine gesonderte Abrechnung der elektrischen Energie zum Aufladen einer Batterie eines Fahrzeugs erfolgen darf. Gemäß der obigen Beschreibung zu Fig. 1 kann die zweite Ladevorrichtungskennung beispielsweise eine private Ladestation eines Mitarbeiters eines Unternehmens identifizieren, für welche es dem Mitarbeiter gestattet ist, die Kosten für das Aufladen der elektrischen Batterie eines Fahrzeugs (z.B. des Fahrzeugs 120) über das Unternehmen abrechnen zu lassen.

Vorteilhafterweise stellen die Schritte 410 und 420 zum Beispiel ein weiteres Sicherheitsmerkmal bereit, um Betrugsfälle von unerlaubten Abrechnungen der Stromkosten für das Aufladen von Elektrofahrzeugen über ein Unternehmen zu verhindern.

In Bezug auf Fig. 2, Fig. 3 und Fig. 4 ist auch eine Kombination mehrerer Bedingungen für das Bereitstellen einer Abrechnungsinformation möglich. So kann beispielsweise eine Kombination der Bedingungen aus Schritt 330 und Schritt 420 vorliegen, sodass ein Bereitstellen einer Abrechnungsinformation in Schritt 230 (z.B. nur dann) erfolgt, wenn i) die erste Fahrzeugkennung mit der zweiten Fahrzeugkennung übereinstimmt, wenn ii) zusätzlich sich die Position der Vorrichtung 150 innerhalb eines vorgegebenen Positionsbereiches befindet und wenn iii) zusätzlich die erste Ladevorrichtungskennung mit einer zweiten Ladevorrichtungskennung übereinstimmt

Fig. 5 zeigt eine schematische Darstellung einer beispielhaften Ausführungsform der Vorrichtung gemäß der vorliegenden Offenbarung. Beispielsweise kann die Vorrichtung 50 als die in der Fig. 1 gezeigten Vorrichtung 150 verstanden werden. In einem anderen Beispiel kann die Vorrichtung 50 als Teil der Vorrichtung 150 verstanden werden.

Die Vorrichtung 50 umfasst beispielhaft einen Prozessor 51. Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 50 auch mehrere Prozessoren 51 umfassen kann.

Der Prozessor 51 führt Programmanweisungen aus, die in einem Programmspeicher 52 gespeichert sind, und speichert beispielsweise Zwischenergebnisse oder ähnliches in einem Arbeitsspeicher 53. Der Programmspeicher 52 enthält beispielsweise Programmanweisungen eines Computerprogramms gemäß der vorliegenden Offenbarung, das Programmanweisungen umfasst, die den Prozessor 51 veranlassen, das Verfahren gemäß der vorliegenden Offenbarung (z.B. das Verfahren 200 gemäß Fig. 2) auszuführen und/oder zu steuern, wenn der Prozessor 51 die in dem Programmspeicher 52 gespeicherten Programmanweisungen ausführt

Der Programmspeicher 52 enthält ferner beispielsweise ein Betriebssystem der Vorrichtung 50, das beim Starten der Vorrichtung 50 zumindest teilweise in den Arbeitsspeicher 53 geladen und vom Prozessor 51 ausgeführt wird. Insbesondere wird beim Starten der Vorrichtung 50 zumindest ein Teil des Kerns des Betriebssystems in den Arbeitsspeicher 53 geladen und von Prozessor 51 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 50 zur Datenverarbeitung. Es verwaltet beispielsweise Betriebsmittel wie den Programmspeicher 52 und den Arbeitsspeicher 53 und stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Ein Arbeitsspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Die Vorrichtung 50 kann zusätzlich die Speichermittel 54 umfassen, wobei der Prozessor 51 beispielsweise derart mit den Speichermitteln 54 verbunden ist, dass elektronische Information von der Vorrichtung 50 in den Speichermitteln 54 abgespeichert oder von der Vorrichtung 50 aus den Speichermitteln 54 abgerufen werden kann. Die Speichermittel 54 können beispielsweise einen elektronischen Speicher umfassen, in welchem die Vorrichtung 50 elektronische Informationen wie beispielsweise eine oder mehrere Fahrzeugkennungen, Abrechnungsinformationen, Ladeinformationen, Ladevorrichtungskennungen und/oder Positionsinformationen abspeichern kann. Die Speichermittel 54 können beispielsweise als ein separater elektronischer Speicher verstanden werden, oder auch Teil des Programmspeichers 52 oder Arbeitsspeichers 53 sein.

Die Vorrichtung 50 kann zusätzlich die Kommunikationsmittel 55 umfassen, wobei der Prozessor 51 beispielsweise derart mit den Kommunikationsmitteln 55 verbunden ist, dass elektronische Information von der Vorrichtung 50 über die Kommunikationsmittel 55 versendet oder empfangen werden können. In Bezug auf die Vorrichtung 150 in Fig. 1 sind die Kommunikationsmittel 55 beispielsweise eingerichtet, die Kommunikationsverbindung 170 bereitzustellen. Zum Beispiel umfassen die Kommunikationsmittel 55 eine Funkschnittstelle zur Kommunikation gemäß einem Mobilfunkstandard (z.B. dem 3G, 4G oder 5G Standard) oder gemäß einer anderen drahtlosen Funkkommunikationstechnologie (z.B. WiFi). Alternativ oder zusätzlich umfassen die Kommunikationsmittel eine Schnittstelle zur Kommunikation gemäß einer drahtgebundenen Technologie (z.B. USB oder Ethernet).

Die Vorrichtung 50 kann zusätzlich die Messmittel 56 umfassen, wobei der Prozessor 51 beispielsweise derart mit den Messmitteln 56 verbunden ist, dass elektronische Informationen (z.B. eine Ladeinformation) von den Messmitteln 56 bestimmt und anschließend an die Vorrichtung 50 übertragen werden können. Die Messmittel 56 umfassen zum Beispiel einen Stromzähler, welcher in Bezug auf die Vorrichtung 150 in Fig. 1 eingerichtet ist, die über das Ladekabel 160 von der Ladevorrichtung 110 an das Fahrzeug 120 übertragene elektrische Energie zu erfassen (z.B. zu messen). Ein solcher Stromzähler umfasst beispielsweise mehrere elektronische Bauteile, wie einen Messwandler, einen Analog-Digital-Wandler, einen Prozessor und/oder einen internen elektronischen Speicher.

Die Vorrichtung 50 kann zusätzlich die Positionierungsmittel 57 umfassen, wobei der Prozessor 51 beispielsweise derart mit den Positionierungsmitteln 57 verbunden ist, dass elektronische Informationen (z.B. eine Positionsinformation) von den Positionierungsmitteln 57 bestimmt und anschließend an die Vorrichtung 50 übertragen werden können. Die Positionierungsmittel umfassen beispielsweise einen oder mehrere Sensoren zur Satellitenpositionierung (z.B. einen GPS-Sensor), um die Positionskoordinaten der Vorrichtung 50 zu einem bestimmten Zeitpunkt zu erfassen. Alternativ oder zusätzlich können die Positionierungsmittel 57 eine Position der Vorrichtung 50 zum Beispiel über Funktriangulation (z.B. basierend auf von einer Funkschnittstelle der Kommunikationsmittel 55 empfangenen Mobilfunksignalen) bestimmen.

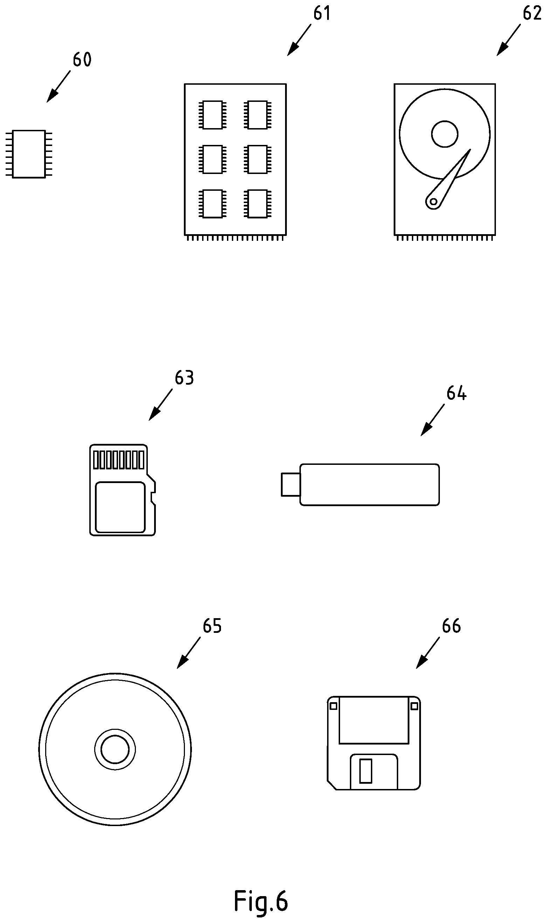

Fig. 6 zeigt beispielhafte Ausführungsformen von Speichermedien, auf denen zum Beispiel ein Computerprogramm gemäß der vorliegenden Offenbarung gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 51 der Fig. 5) sein, beispielsweise ein (nicht-flüchtiger oder flüchtiger) Programmspeicher des Prozessors oder ein Teil davon (z.B. Programmspeicher 52 in Fig. 5). Ausführungsbeispiele eines Speichermediums sind ein Flash-Speicher 60, eine SSD-Festplatte 61, eine magnetische Festplatte 62, eine Speicherkarte 63, ein Memory Stick 65 (z.B. ein USB-Stick), eine CD-ROM oder DVD 65 oder eine Diskette 66.

Die in dieser Spezifikation beschriebenen beispielhaften Ausführungsformen der vorliegenden Offenbarung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Offenbarung geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden Ausführungsbeispiele werden als Teil der vorliegenden Offenbarung offenbart:
Ausführungsbeispiel 1: Vorrichtung, umfassend Mittel eingerichtet zum:
   - Erhalten einer Ladeinformation, wobei die Ladeinformation eine von einer Ladevorrichtung an ein Fahrzeug übertragene elektrische Energie anzeigt;
   - Erhalten einer ersten Fahrzeugkennung, welche das Fahrzeug identifiziert;
   - Bereitstellen einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug übertragene elektrische Energie repräsentiert.
Ausführungsbeispiel 2: Die Vorrichtung gemäß Ausführungsbeispiel 1, wobei die Mittel der Vorrichtung ferner eingerichtet sind zum Bestimmen, ob die erste Fahrzeugkennung mit der zweiten Fahrzeugkennung übereinstimmt
Ausführungsbeispiel 3: Die Vorrichtung gemäß einem der Ausführungsbeispiele 1 und 2, wobei die Abrechnungsinformation ferner das Fahrzeug identifiziert, und wobei eine Abrechnung der an das Fahrzeug übertragenen elektrischen Energie zumindest teilweise basierend auf dem von der Abrechnungsinformation identifizierten Fahrzeug erfolgt
Ausführungsbeispiel 4: Die Vorrichtung gemäß einem der Ausführungsbeispiele 1 und 3, ferner umfassend Speichermittel, wobei die Speichermittel eingerichtet sind zum Speichern einer Vielzahl von Fahrzeugkennungen umfassend die zweite Fahrzeugkennung.
Ausführungsbeispiel 5: Die Vorrichtung gemäß einem der Ausführungsbeispiele 1 bis 4, ferner umfassend Kommunikationsmittel, wobei die Kommunikationsmittel eingerichtet sind, die bereitgestellte Abrechnungsinformation an einen Backend-Server zu übertragen.
Ausführungsbeispiel 6: Die Vorrichtung gemäß einem der Ausführungsbeispiele 1 bis 5, ferner umfassend Messmittel, wobei die Messmittel eingerichtet sind, die an das Fahrzeug übertragene elektrische Energie zu erfassen und die Ladeinformation zu bestimmen.
Ausführungsbeispiel 7: Die Vorrichtung gemäß einem der Ausführungsbeispiele 1 bis 6, ferner umfassend Verbindungsmittel, wobei die Verbindungsmittel eingerichtet sind, die Vorrichtung mit dem Fahrzeug und die Vorrichtung mit der Ladevorrichtung zu verbinden.
Ausführungsbeispiel 8: Die Vorrichtung gemäß einem der Ausführungsbeispiele 1 bis 7, wobei die Mittel ferner eingerichtet sind zum Empfangen der ersten Fahrzeugkennung von dem Fahrzeug.
Ausführungsbeispiel 9: Die Vorrichtung gemäß einem der Ausführungsbeispiele 1 bis 8, wobei die Mittel ferner eingerichtet sind zum
   - Erhalten einer Positionsinformation, wobei die Positionsinformation eine Position der Vorrichtung anzeigt;
   - Bestimmen, ob sich die Position der Vorrichtung innerhalb eines vorgegebenen Positionsbereiches befindet; und
   - Bereitstellen der Abrechnungsinformation, wenn zusätzlich bestimmt wird, dass sich die Position der Vorrichtung innerhalb eines vorgegebenen Positionsbereiches befindet.
Ausführungsbeispiel 10: Die Vorrichtung gemäß Ausführungsbeispiel 9, ferner umfassend Positionierungsmittel, wobei die Positionierungsmittel eingerichtet sind, die Position der Vorrichtung zu erfassen und die Positionsinformation zu bestimmen.
Ausführungsbeispiel 11: Die Vorrichtung gemäß einem der Ausführungsbeispiele 1 bis 10, wobei die Mittel ferner eingerichtet sind zum
   - Erhalten einer ersten Ladevorrichtungskennung, welche die Ladevorrichtung identifiziert; und
   - Bereitstellen der Abrechnungsinformation, wenn zusätzlich bestimmt wird, dass die erste Ladevorrichtungskennung mit einer zweiten Ladevorrichtungskennung übereinstimmt.
Ausführungsbeispiel 12: Die Vorrichtung gemäß Ausführungsbeispiel 11, wobei die Mittel der Vorrichtung ferner eingerichtet sind zum Bestimmen, ob die erste Ladevorrichtungskennung mit der zweiten Ladevorrichtungskennung übereinstimmt
Ausführungsbeispiel 13: Die Vorrichtung gemäß einem der Ausführungsbeispiele 11 und 12, ferner umfassend Speichermittel, wobei die Speichermittel eingerichtet sind zum Speichern einer Vielzahl von Ladevorrichtungskennungen umfassend die zweite Ladevorrichtungskennung.
Ausführungsbeispiel 14: Die Vorrichtung gemäß einem der Ausführungsbeispiele 1 bis 13, wobei die Vorrichtung zumindest ein Teil eines Ladekabels zum Aufladen eines elektrischen Speichers des Fahrzeugs ist oder wobei die Vorrichtung mit einem Ladekabel zum Aufladen eines elektrischen Speichers des Fahrzeugs verbindbar ist
Ausführungsbeispiel 15: Verfahren umfassend:
   - Erhalten einer Ladeinformation, wobei die Ladeinformation eine von einer Ladevorrichtung an ein Fahrzeug übertragene elektrische Energie anzeigt;
   - Erhalten einer ersten Fahrzeugkennung, welche das Fahrzeug identifiziert;
   - Bereitstellen einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug übertragene elektrische Energie repräsentiert.
Ausführungsbeispiel 16: Computerprogramm, umfassend Befehle, die bewirken, dass eine Vorrichtung die Verfahrensschritte nach Ausführungsbeispiel 15 ausführt

## Patentansprüche

1. Vorrichtung (150;50), umfassend Mittel (51;52;53) eingerichtet zum:
- Erhalten (210) einer Ladeinformation, wobei die Ladeinformation eine von einer Ladevorrichtung (110) an ein Fahrzeug (120) übertragene elektrische Energie anzeigt;
- Erhalten (220) einer ersten Fahrzeugkennung, welche das Fahrzeug (120) identifiziert;
- Bereitstellen (230) einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug (120) übertragene elektrische Energie repräsentiert.

2. Die Vorrichtung (150;50) gemäß Anspruch 1, wobei die Mittel (51;52;53) der Vorrichtung (150;50) ferner eingerichtet sind zum Bestimmen, ob die erste Fahrzeugkennung mit der zweiten Fahrzeugkennung übereinstimmt.

3. Die Vorrichtung (150;50) gemäß einem der Ansprüche 1 und 2, wobei die Abrechnungsinformation ferner das Fahrzeug (120) identifiziert, und wobei eine Abrechnung der an das Fahrzeug (120) übertragenen elektrischen Energie zumindest teilweise basierend auf dem von der Abrechnungsinformation identifizierten Fahrzeug (120) erfolgt.

4. Die Vorrichtung (150;50) gemäß einem der Ansprüche 1 und 3, ferner umfassend Speichermittel (54), wobei die Speichermittel (54) eingerichtet sind zum Speichern einer Vielzahl von Fahrzeugkennungen umfassend die zweite Fahrzeugkennung.

5. Die Vorrichtung (150;50) gemäß einem der Ansprüche 1 bis 4, ferner umfassend Kommunikationsmittel (55), wobei die Kommunikationsmittel (55) eingerichtet sind, die bereitgestellte Abrechnungsinformation an einen Backend-Server (130) zu übertragen.

6. Die Vorrichtung (150;50) gemäß einem der Ansprüche 1 bis 5, ferner umfassend Messmittel (56), wobei die Messmittel (56) eingerichtet sind, die an das Fahrzeug (120) übertragene elektrische Energie zu erfassen und die Ladeinformation zu bestimmen.

7. Die Vorrichtung (150;50) gemäß einem der Ansprüche 1 bis 6, ferner umfassend Verbindungsmittel (140a;140b), wobei die Verbindungsmittel (140a;140b) eingerichtet sind, die Vorrichtung (150;50) mit dem Fahrzeug (120) und die Vorrichtung (150;50) mit der Ladevorrichtung (110) zu verbinden.

8. Die Vorrichtung (150;50) gemäß einem der Ansprüche 1 bis 7, wobei die Mittel (51;52;53) ferner eingerichtet sind zum Empfangen der ersten Fahrzeugkennung von dem Fahrzeug (120).

9. Die Vorrichtung (150;50) gemäß einem der Ansprüche 1 bis 8, wobei die Mittel (51;52;53) ferner eingerichtet sind zum
- Erhalten (310) einer Positionsinformation, wobei die Positionsinformation eine Position der Vorrichtung (150;50) anzeigt;
- Bestimmen (320), ob sich die Position der Vorrichtung (150;50) innerhalb eines vorgegebenen Positionsbereiches befindet; und
- Bereitstellen (330) der Abrechnungsinformation, wenn zusätzlich bestimmt wird, dass sich die Position der Vorrichtung (150;50) innerhalb eines vorgegebenen Positionsbereiches befindet

10. Die Vorrichtung (150;50) gemäß Anspruch 9, ferner umfassend Positionierungsmittel (57), wobei die Positionierungsmittel (57) eingerichtet sind, die Position der Vorrichtung (150;50) zu erfassen und die Positionsinformation zu bestimmen.

11. Die Vorrichtung (150;50) gemäß einem der Ansprüche 1 bis 10, wobei die Mittel (51;52;53) ferner eingerichtet sind zum
- Erhalten (410) einer ersten Ladevorrichtungskennung, welche die Ladevorrichtung (110) identifiziert; und
- Bereitstellen (420) der Abrechnungsinformation, wenn zusätzlich bestimmt wird, dass die erste Ladevorrichtungskennung mit einer zweiten Ladevorrichtungskennung übereinstimmt, wobei die Mittel (51;52;53) der Vorrichtung (150;50) ferner insbesondere eingerichtet sind zum Bestimmen, ob die erste Ladevorrichtungskennung mit der zweiten Ladevorrichtungskennung übereinstimmt

12. Die Vorrichtung (150;50) gemäß Anspruch 11, ferner umfassend Speichermittel (54), wobei die Speichermittel (54) eingerichtet sind zum Speichern einer Vielzahl von Ladevorrichtungskennungen umfassend die zweite Ladevorrichtungskennung.

13. Die Vorrichtung (150;50) gemäß einem der Ansprüche 1 bis 12, wobei die Vorrichtung (150;50) zumindest ein Teil eines Ladekabels zum Aufladen eines elektrischen Speichers des Fahrzeugs (120) ist oder wobei die Vorrichtung (150;50) mit einem Ladekabel zum Aufladen eines elektrischen Speichers des Fahrzeugs (120) verbindbar ist.

14. Verfahren (200) umfassend:
- Erhalten (210) einer Ladeinformation, wobei die Ladeinformation eine von einer Ladevorrichtung (110) an ein Fahrzeug (120) übertragene elektrische Energie anzeigt;
- Erhalten (220) einer ersten Fahrzeugkennung, welche das Fahrzeug (120) identifiziert;
- Bereitstellen (230) einer Abrechnungsinformation, wenn bestimmt wird, dass die erste Fahrzeugkennung mit einer zweiten Fahrzeugkennung übereinstimmt, wobei die Abrechnungsinformation zumindest die an das Fahrzeug (120) übertragene elektrische Energie repräsentiert.

15. Computerprogramm, umfassend Befehle, die bewirken, dass eine Vorrichtung (150;50) die Verfahrensschritte (210;220;230) nach Anspruch 14 ausführt
